# FASCICULE DE BREVET EUROPEEN

(11) **EP 1 369 970 B1**
(45) Date de publication et mention de la délivrance du brevet: **15.03.2017**
(21) Numéro de dépôt: 03354031.1
(22) Date de dépôt: 14.04.2003
(51) Int. Cl.: H02B 1/40

(54) **Dispositif de fixation d'un coffret électrique sur une surface de support**
Befestigungsvorrichtung eines elektrischen Gehäuses auf einer Trägerfläche
Fixation device of a wall-mounted electrical casing

(30) Priorité: 05.06.2002 FR 0206889
(43) Date de publication de la demande: 10.12.2003
(73) Titulaire: Schneider Electric Industries SAS, 92500 Rueil-Malmaison (FR)
(72) Inventeur: Balaud, P., c/o Schneider Electric Industries SAS, 38050 Grenoble cedex 09 (FR); Corbalan, J., c/o Schneider Electric Industries, 38050 Grenoble cedex 09 (FR)
(74) Mandataire: Tripodi, Paul

(56) Documents cités:
- EP-A- 0 991 155
- DE-A- 2 942 946

## Description

La présente invention concerne un dispositif de fixation d'un coffret électrique sur une surface de support, comprenant quatre orifices prévus dans la paroi de fond du coffret au voisinage respectivement des quatre coins de celle-ci, quatre vis destinées à traverser respectivement les quatre orifices pour être vissées dans la surface de support et, associé à chaque orifice, un obturateur apte à obturer partiellement le dit orifice et comportant une ouverture dite première apte à recevoir à coulissement la tige de la vis associée audit orifice de manière que ledit obturateur forme une surface d'appui pour la tête de vis tout en permettant à la vis de prendre différentes positions à l'intérieur de l'ouverture et ainsi autoriser un réglage de la position du coffret par rapport à la surface murale.

On connaît par exemple des systèmes de fixation murale de coffrets électriques constitués par quatre boutonnières prévues respectivement aux quatre coins de la paroi de fond du coffret. Ces boutonnières sont destinées à recevoir chacune une vis de fixation destinée à traverser l'orifice de la boutonnière pour être fixée dans la paroi murale.

Or, ce type de moyen de fixation n'autorise qu'un très léger réglage essentiellement vertical, et ne permet donc pas de rattraper les erreurs de perçage.

On connaît aussi un système de fixation du genre décrit dans le premier paragraphe ci-dessus et dans lequel l'obturateur est constitué par une rondelle comportant une ouverture oblongue, une telle rondelle étant apte à être introduite dans chacun des orifices prévus aux quatre coins de la paroi de fond du coffret. Chacune des rondelles est fixée dans l'un des orifices de manière à pouvoir tourner à l'intérieur dudit orifice. Dans ce type de système de fixation, un réglage de la position du coffret est possible, mais implique que les quatre rondelles soient entraînées en rotation en même temps. En outre, la fixation du coffret nécessite de supporter ledit coffret.

Les documents DE 2942946 A1 et EP 0991155 A1 décrivent chancun un dispositif de fixation d'un coffret électrique sur une surface de support correspondant à l'art antérieur.

La présente invention résout ces problèmes et propose un dispositif de fixation d'un coffret électrique de conception simple et offrant des possibilités de réglage importantes sans contrainte de montage.

A cet effet, la présente invention a pour objet un dispositif de fixation du genre précédemment mentionné, ce dispositif étant caractérisé en ce que l'obturateur précité est monté en rotation autour d'une tige formant axe de rotation s'étendant perpendiculairement à la paroi de fond, ledit obturateur étant en outre monté à coulissement par rapport à ladite tige sensiblement perpendiculairement à l'axe de ladite tige de manière que ledit obturateur puisse remplir sa fonction de surface d'appui à la tête de vis quelque soit la position de celle-ci sur sensiblement toute la surface de l'orifice.

Selon une réalisation particulière de l'invention, l'obturateur comporte une seconde ouverture de forme oblongue recevant à coulissement ladite tige formant axe de rotation, ladite ouverture présentant une largeur légèrement supérieure au diamètre de la tige et une longueur réglée de manière que ledit obturateur puisse remplir sa fonction de surface d'appui à la tête de vis quelque soit la position de celle-ci sur sensiblement toute la surface de l'orifice.

Selon une caractéristique particulière de l'invention, ledit obturateur s'étend dans un plan sensiblement perpendiculaire à l'axe de rotation précité et la seconde ouverture précitée s'étend sur toute l'épaisseur de l'obturateur, ladite épaisseur étant définie parallèlement à l'axe de rotation, ladite tige étant fixée par l'une de ses extrémités sur la paroi de fond et comportant à son extrémité opposée un élément d'arrêt apte à retenir l'obturateur sur la tige.

Mais d'autres avantages et caractéristiques de l'invention apparaîtront mieux dans la description détaillée qui suit et se réfère aux dessins annexés donnés uniquement à titre d'exemple et dans lesquels :
- La figure 1 illustre dans une vue en plan schématique, l'un des angles de la face arrière d'un coffret électrique comportant l'un des quatre éléments du dispositif de fixation selon l'invention, préalablement à l'opération de fixation,
- La figure 2 illustre schématiquement la face arrière du coffret comportant la totalité du dispositif de fixation, en position de préaccrochage du coffret, et
- La figure 3 est une vue similaire à la précédente, en position fixée du coffret.

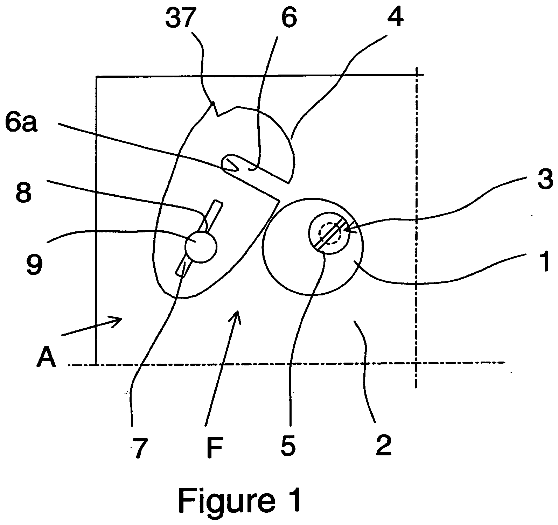

Sur la figure 1, on voit l'angle supérieur gauche A de la face arrière d'un coffret électrique comportant une partie d'un dispositif de fixation F selon l'invention, ce dispositif étant destiné à réaliser la fixation d'un coffret électrique sur une paroi murale. Cette partie du dispositif comporte un orifice 1 prévu dans la face arrière 2 du coffret, destiné à recevoir une vis de fixation 3, ainsi qu'un obturateur de verrouillage 4. L'orifice de fixation 1 présente un diamètre très nettement supérieur au diamètre de la tête 5 de vis 3. L'obturateur de verrouillage 4 est constitué par une pièce de préférence métallique de forme ovoïde aplatie comportant une première ouverture oblongue 6 débouchante sur l'un des bords dudit obturateur 4 et une seconde ouverture 7 non débouchante, ces deux ouvertures traversant toute l'épaisseur dudit obturateur. L'ouverture 7, dite seconde, dudit obturateur présente dans le plan dudit obturateur, une section de forme également oblongue. A l'intérieur de cette ouverture 7 est montée une tige 8 traversant ladite ouverture 7 perpendiculairement au plan dudit obturateur pour être fixée par l'une de ses extrémités, sur la face arrière 2, ou paroi de fond, du coffret électrique tandis que son autre extrémité comporte un élément en forme de disque 9 constituant un élément d'arrêt apte à retenir l'obturateur 4 sur la tige 8. La largeur de ladite ouverture 7 dans le plan de l'obturateur est légèrement supérieure au diamètre de la tige 8 de manière que ladite tige d'une part, constitue un axe de rotation pour l'obturateur 4, et d'autre part, autorise un déplacement en translation de l'obturateur par rapport à ladite tige perpendiculairement à l'axe longitudinal de la tige, ce qui revient pour l'obturateur, à avoir un axe de rotation par rapport auquel l'obturateur se déplace en translation suivant une certaine course. L'ouverture oblongue, dite première 6, débouchant sur l'un des bords de l'obturateur 4 en direction de l'orifice 1, présente également une largeur légèrement supérieure au diamètre de la tige de vis 3 de manière à pouvoir recevoir à coulissement ladite tige. Cette ouverture 6 s'étend sur environ la moitié de la largeur de l'obturateur 4 et se termine, à l'intérieur de l'obturateur, par une partie arrondie 6a.

Comme on le voit sur les figures, les deux ouvertures 6,7 s'étendent suivant des directions sensiblement perpendiculaires l'une par rapport à l'autre. La première ouverture 6 s'étend dans la partie présentant la plus grande largeur de la partie ovoïde suivant une direction perpendiculaire à la longueur de la pièce, tandis que la seconde ouverture 7 s'étend dans la partie présentant la plus petite largeur de la partie ovoïde suivant une direction sensiblement perpendiculaire à la première. La longueur de la seconde ouverture précitée 7 est déterminée de manière que la tige de la vis de fixation 3 puisse être amenée dans la partie de fond 6a de la première ouverture 6 quelque soit la position de ladite vis 3 à l'intérieur dudit orifice 1, par entraînement dudit obturateur dans un mouvement combiné de rotation autour dudit axe de la tige 8 et de translation par rapport audit axe.

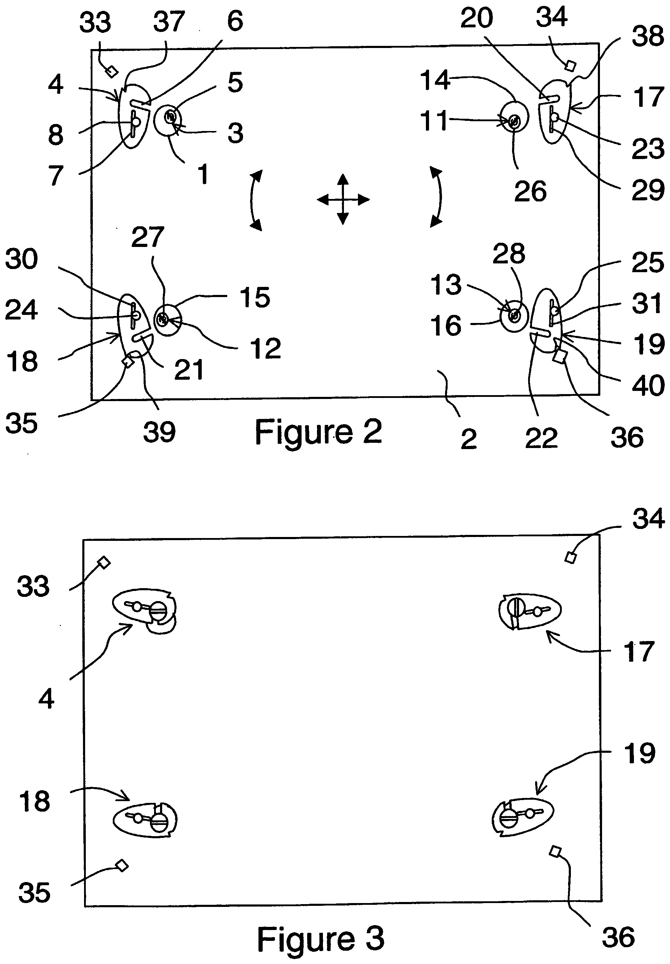

Comme ceci est plus particulièrement visible sur la figure 2, chaque partie du dispositif de fixation comporte également un pion 33,34,35,36 solidaire d'une embase fixée sur la paroi de fond 2, ledit pion étant situé au voisinage de l'obturateur 4,17,18,19 et étant destiné à coopérer avec un décrochement, respectivement 37,38,39,40 prévu sur ledit obturateur4,17,18,19, de manière à permettre un accrochage de l'obturateur sur le pion en position de préaccrochage du coffret comme ceci sera expliqué ultérieurement.

Sur la figure 2, on voit que les quatre coins de la paroi de fond 2 du coffret, ou face arrière, sont équipés du système décrit sur la figure 1. L'opération de fixation du coffret va être décrite dans ce qui suit en référence aux figures.

Après un pré-vissage des quatre vis 3,11,12,13 dans la paroi murale, le coffret est soulevé et positionné contre la paroi murale de manière que les quatre vis 3,11,12,13 soient introduites respectivement dans les quatre orifices 1,14,15,16 prévus dans la paroi de fond 2. Puis, le coffret est suspendu aux deux vis 3,11 situées au niveau supérieur de manière à réaliser un préaccrochage du coffret. Pendant cette opération, les obturateurs inférieurs 18,19 sont amenés par gravité dans une position dans laquelle ils sont accrochés sur les pions, respectivement 35,36, de manière à autoriser le passage des vis 27,28 correspondante. Ces deux obturateurs 18,19 situés à la partie inférieure de la paroi de fond 2 sont alors déplacés en rotation et en translation par rapport à leur tige associée 24,25 formant axe de rotation de manière à obturer partiellement l'orifice correspondant 15,16 de la paroi de fond 2 et de manière que les tiges des vis de fixation associées 12,13 soient amenées à l'intérieur des premières ouvertures 21,22 jusqu'à l'extrémité arrondie desdites ouvertures, une mise à niveau du coffret étant réalisée lors de cette opération. Dans cette position, l'opération de vissage des vis 12,13 est alors poursuivie jusqu'à obtenir l'immobilisation en rotation des obturateurs 18,19. On procède alors à la mise en service des obturateurs 4,17 du niveau supérieur par rotation et translation desdits obturateurs par rapport à l'axe de rotation constitué par la tige qui leur est associée, jusqu'à ce que les tiges des vis de fixation 3,11 soient amenées au fond des premières ouvertures 6,20 des obturateurs 4,17. Puis, comme précédemment, l'opération de vissage est poursuivie jusqu'à immobilisation des obturateurs supérieurs, lesquels servent de surfaces d'appui aux têtes de vis 5,26. Dans cette position, le coffret est fixé au support mural, tel que représenté sur la figure 3.

On notera que les deux autres pions 33,34 sur embase ont été prévus pour réaliser la même fonction que précédemment décrite pour les pions 35,36, mais dans le cas où le coffret est monté en position inversée, ces obturateurs étant alors situés en position inférieure.

On notera également que l'opération de vissage du coffret pourra être réalisée en commençant soit par le haut, soit par le bas du coffret.

On voit ainsi que les obturateurs selon l'invention permettent aux vis d'être positionnées sur sensiblement toute la surface des orifices.

On a donc réalisé grâce à l'invention, un dispositif de fixation d'un coffret électrique de conception simple, offrant des possibilités de réglage importantes, permettant une grande tolérance à l'erreur particulièrement utile lorsqu'il s'agit de rattraper des erreurs de perçage.

## Revendications

1. Dispositif de fixation d'un coffret électrique sur une surface de support, comprenant quatre orifices (1,14,15,16) prévus dans la paroi de fond (2) du coffret au voisinage respectivement des quatre coins de celle-ci, quatre vis (3,11,12,13) destinées à traverser respectivement les quatre orifices pour être vissées dans la surface de support et, associé à chaque orifice, un obturateur (4,17,18,19) apte à obturer partiellement le dit orifice et comportant une ouverture dite première (6,20,21,22) apte à recevoir à coulissement la tige de la vis (3,11,12,13) associée audit orifice, de manière que ledit obturateur forme une surface d'appui pour la tête (5,26,27,28) de vis tout en permettant à la vis de prendre différentes positions à l'intérieur de l'ouverture et ainsi à autoriser un réglage de la position du coffret par rapport à la surface murale, **caractérisé en ce que** l'obturateur précité (4,17,18,19) est monté en rotation autour d'une tige (8,23,24,25) formant axe de rotation s'étendant perpendiculairement à la paroi de fond (2), ledit obturateur (4,17,18,19) étant en outre monté à coulissement par rapport à ladite tige sensiblement perpendiculairement à l'axe de ladite tige (8,23,24,25) de manière que ledit obturateur (4,17,18,19) puisse remplir sa fonction de surface d'appui à la tête (5,26,27,28) de vis (3,11,12,13) quelque soit la position de celle-ci, sur sensiblement toute la surface de l'orifice (1,14,15,16).

2. Dispositif selon la revendication 1, **caractérisé en ce que** l'obturateur (4,17,18,19) comporte une seconde ouverture (7,29,30,31) de forme oblongue recevant à coulissement ladite tige (8,23,24,25) formant axe de rotation, ladite ouverture (7,29,30,31) présentant une largeur légèrement supérieure au diamètre de la tige (8,23,24,25) et une longueur réglée de manière que ledit obturateur (4,17,18,19) puisse remplir sa fonction de surface d'appui à la tête (5,26,27,28) de vis (3,11,12,13) quelque soit la position de celle-ci sur sensiblement toute la surface de l'orifice (1,14,15,16).

3. Dispositif selon la revendication 2, **caractérisé en ce que** ledit obturateur (4,17,18,19) s'étend dans un plan sensiblement perpendiculaire à l'axe de rotation précité et **en ce que** la seconde ouverture précitée (7,29,30,31) s'étend sur toute l'épaisseur de l'obturateur (4,17,18,19), ladite tige (8, 23,24,25) étant fixée par l'une de ses extrémités sur la paroi de fond (2) et comportant à son extrémité opposée un élément d'arrêt (9) apte à retenir l'obturateur (4,17,18,19) sur la tige (8,23,24,25).

4. Dispositif selon l'une quelconque des revendications précédentes, **caractérisé en ce que** la première ouverture précitée (6,20,21,22) est débouchante en direction de l'orifice (1,14,15,16).

5. Dispositif selon l'une quelconque des revendications 2 à 4, **caractérisé en ce que** la première (6,20,21,22) et la seconde ouverture (7,29,30,31) s'étendent suivant des directions sensiblement perpendiculaires l'une par rapport à l'autre.

6. Dispositif selon l'une quelconque des revendications précédentes, **caractérisé en ce que** ledit obturateur (4,17,18,19) présente une forme ovoïde aplatie.

7. Dispositif selon la revendication 6, **caractérisé en ce que** la première ouverture (6,20,21,22) est située dans la partie de l'obturateur (4,17,18,19) présentant la plus grande largeur, tandis que la seconde ouverture (7,29,30,31) est située dans la partie de l'obturateur (4,17,18,19) présentant la largeur la plus petite.

8. Dispositif selon les revendications 4 et 7, **caractérisé en ce que** la première ouverture (6,20,21,22) s'étend sur environ la moitié de la largeur de l'obturateur (4,17,18,19) et se termine, à l'intérieur de l'obturateur (4,17,18,19), par une partie arrondie (6a).

9. Dispositif selon l'une quelconque des revendications précédentes, **caractérisé en ce qu'**il comporte au moins un pion (33,34,35,36) solidaire de la paroi de fond, le(s)dit(s) pion(s) étant destiné(s) à coopérer avec respectivement au moins un décrochement (s) (37,38,39,40) prévu(s) respectivement sur l'un au moins des obturateurs (4,17,18,19) de manière à permettre un accrochage du(des) obturateur(s) sur le pion correspondant en position de préaccrochage du coffret.

10. Dispositif selon la revendication 9, **caractérisé en ce qu'**à chacun des obturateurs (4,17,18,19) est associé un pion (33,34,35,36).

## Patentansprüche

1. Vorrichtung zur Befestigung eines Schaltkastengehäuses auf einer Trägerfläche, umfassend vier Öffnungen (1, 14, 15, 16), die in der Rückwand (2) des Gehäuses jeweils in der Nähe seiner vier Ecken vorgesehen sind, vier Schrauben (3, 11, 12, 13), die dazu bestimmt sind, jeweils die vier Öffnungen zu durchqueren, um in die Trägerfläche geschraubt zu werden, und zu jeder Öffnung gehörend ein Verschlussstück (4, 17, 18, 19), das geeignet ist, die Öffnung teilweise zu verschließen und ein erstes Schlitzloch (6, 20, 21, 22) umfasst, das geeignet ist, den Schaft der zu dieser Öffnung gehörenden Schraube (3, 11, 12, 13) verschieblich aufzunehmen, so dass das Verschlussstück eine Auflagefläche für den Schraubenkopf (5, 26, 27, 28) bildet und es der Schraube gleichzeitig ermöglicht, verschiedene Positionen innerhalb des Schlitzlochs einzunehmen und so ein Einstellen der Position des Gehäuses in Bezug auf die Wandfläche zu erlauben, **dadurch gekennzeichnet, dass** das vorgenannte Verschlussstück (4, 17, 18, 19) drehbeweglich um einen Schaft (8, 23, 24, 25) gelagert ist, der die Drehachse bildet und sich senkrecht zur Rückwand (2) erstreckt, wobei das Verschlussstück (4, 17, 18, 19) darüber hinaus im Wesentlichen senkrecht zur Achse des Schafts (8, 23, 24, 25) verschieblich in Bezug auf diesen Schaft gelagert ist, so dass das Verschlussstück (4, 17, 18, 19) seine Funktion als Auflagefläche für den Kopf (5, 26, 27, 28) der Schraube (3, 11, 12, 13) unabhängig von deren Position über im Wesentlichen die gesamte Fläche der Öffnung (1, 14, 15, 16) erfüllen kann.

2. Vorrichtung nach Anspruch 1, **dadurch gekennzeichnet, dass** das Verschlussstück (4, 17, 18, 19) ein zweites Schlitzloch (7, 29, 30, 31) mit länglicher Form umfasst, das den die Drehachse bildenden Schaft (8, 23, 24, 25) verschieblich aufnimmt, wobei das Schlitzloch (7, 29, 30, 31) eine Breite aufweist, die geringfügig größer als der Durchmesser des Schafts (8, 23, 24, 25) ist, und eine Länge, die so eingestellt ist, dass das Verschlussstück (4, 17, 18, 19) seine Funktion als Auflagefläche für den Kopf (5, 26, 27, 28) der Schraube (3, 11, 12, 13) unabhängig von deren Position über im Wesentlichen die gesamte Fläche der Öffnung (1, 14, 15, 16) erfüllen kann.

3. Vorrichtung nach Anspruch 2, **dadurch gekennzeichnet, dass** sich das Verschlussstück (4, 17, 18, 19) in einer Ebene erstreckt, die im Wesentlichen senkrecht zur vorgenannten Drehachse verläuft, und dass sich das zweite Schlitzloch (7, 29, 30, 31) über die gesamte Dicke des Verschlussstücks (4, 17, 18, 19) erstreckt, wobei der Schaft (8, 23, 24, 25) an einem seiner Enden an der Rückwand (2) befestigt ist und an seinem entgegengesetzten Ende ein Stoppelement (9) umfasst, das geeignet ist, das Verschlussstück (4, 17, 18, 19) am Schaft (8, 23, 24, 25) zu halten.

4. Vorrichtung nach einem beliebigen der vorhergehenden Ansprüche, **dadurch gekennzeichnet, dass** das vorgenannte erste Schlitzloch (6, 20, 21, 22) in Richtung der Öffnung (1, 14, 15, 16) mündet.

5. Vorrichtung nach einem beliebigen der Ansprüche 2 bis 4, **dadurch gekennzeichnet, dass** sich das erste (6, 20, 21, 22) und das zweite Schlitzloch (7, 29, 30, 31) in Richtungen erstrecken, die im Wesentlichen senkrecht zueinander verlaufen.

6. Vorrichtung nach einem beliebigen der vorhergehenden Ansprüche, **dadurch gekennzeichnet, dass** das Verschlussstück (4, 17, 18, 19) eine abgeflachte Eiform aufweist.

7. Vorrichtung nach Anspruch 6, **dadurch gekennzeichnet, dass** das erste Schlitzloch (6, 20, 21, 22) in dem Teil des Verschlussstücks (4, 17, 18, 19) liegt, der die größte Breite aufweist, während das zweite Schlitzloch (7, 29, 30, 31) in dem Teil des Verschlussstücks (4, 17, 18, 19) liegt, der die kleinste Breite aufweist.

8. Vorrichtung nach den Ansprüchen 4 und 7, **dadurch gekennzeichnet, dass** sich das erste Schlitzloch (6, 20, 21, 22) über etwa die Hälfte der Breite des Verschlussstücks (4, 17, 18, 19) erstreckt und innerhalb des Verschlussstücks (4, 17, 18, 19) in einem abgerundeten Teil (6a) endet.

9. Vorrichtung nach einem beliebigen der vorhergehenden Ansprüche, **dadurch gekennzeichnet, dass** sie mindestens einen mit der Rückwand einteiligen Stift (33, 34, 35, 36) umfasst, wobei der bzw. die Stifte dazu bestimmt sind, mit jeweils mindestens einer Ausnehmung (37, 38, 39, 40) zusammenzuwirken, die jeweils an mindestens einem der Verschlussstücke (4, 17, 18, 19) vorgesehen ist, um ein Festhalten des Verschlussstücks bzw. der Verschlusstücke am entsprechenden Stift in der Position vor dem Aufhängen des Gehäuses zu ermöglichen.

10. Vorrichtung nach Anspruch 9, **dadurch gekennzeichnet, dass** zu jedem der Verschlussstücke (4, 17, 18, 19) ein Stift (33, 34, 35, 36) gehört.

## Claims

1. Device for fixing an electrical casing on a support surface, comprising four orifices (1, 14, 15, 16) provided in the back wall (2) of the casing in the vicinity respectively of the four corners thereof, four screws (3, 11, 12, 13) intended to pass respectively through the four orifices to be screwed into the support surface and, associated with each orifice, a shutter (4, 17, 18, 19) capable of partially shutting said orifice and comprising a so-called first opening (6, 20, 21, 22) capable of slidingly receiving the shank of the screw (3, 11, 12, 13) associated with said orifice, so that said shutter forms a bearing surface for the screw head (5, 26, 27, 28) while allowing the screw to assume different positions in the opening and thus allow an adjustment of the position of the casing relative to the walled surface, **characterized in that** the abovementioned shutter (4, 17, 18, 19) is mounted to rotate about a rotation axis-forming rod (8, 23, 24, 25) extending at right angles to the back wall (2), said shutter (4, 17, 18, 19) also being slidingly mounted relative to said rod substantially at right angles to the axis of said rod (8, 23, 24, 25) such that said shutter (4, 17, 18, 19) can fulfil its function of bearing surface for the head (5, 26, 27, 28) of the screw (3, 11, 12, 13) whatever the position thereof, over substantially all the surface area of the orifice (1, 14, 15, 16).

2. Device according to Claim 1, **characterized in that** the shutter (4, 17, 18, 19) comprises a second opening (7, 29, 30, 31) of oblong form slidingly receiving said rotation axis-forming rod (8, 23, 24, 25), said opening (7, 29, 30, 31) having a width slightly greater than the diameter of the rod (8, 23, 24, 25) and a length set such that said shutter (4, 17, 18, 19) can fulfil its function of bearing surface for the head (5, 26, 27, 28) of the screw (3, 11, 12, 13) whatever the position thereof over substantially all the surface area of the orifice (1, 14, 15, 16).

3. Device according to Claim 2, **characterized in that** said shutter (4, 17, 18, 19) extends in a plane substantially at right angles to the abovementioned rotation axis and **in that** the abovementioned second opening (7, 29, 30, 31) extends over the entire thickness of the shutter (4, 17, 18, 19), said rod (8, 23, 24, 25) being fixed by one of its ends to the back wall (2) and comprising, at its opposite end, a stop element (9) capable of retaining the shutter (4, 17, 18, 19) on the rod (8, 23, 24, 25).

4. Device according to any one of the preceding claims, **characterized in that** the abovementioned first opening (6, 20, 21, 22) emerges towards the orifice (1, 14, 15, 16).

5. Device according to any one of Claims 2 to 4, **characterized in that** the first (6, 20, 21, 22) and the second (7, 29, 30, 31) openings extend in directions substantially at right angles to one another.

6. Device according to any one of the preceding claims, **characterized in that** said shutter (4, 17, 18, 19) has a flattened ovoid form.

7. Device according to Claim 6, **characterized in that** the first opening (6, 20, 21, 22) is situated in the part of the shutter (4, 17, 18, 19) having the greatest width, whereas the second opening (7, 29, 30, 31) is situated in the part of the shutter (4, 17, 18, 19) having the smallest width.

8. Device according to Claims 4 and 7, **characterized in that** the first opening (6, 20, 21, 22) extends over approximately half the width of the shutter (4, 17, 18, 19) and is terminated, within the shutter (4, 17, 18, 19), by a rounded part (6a).

9. Device according to any one of the preceding claims, **characterized in that** it comprises at least one pin (33, 34, 35, 36) integral to the back wall, said pin(s) being intended to cooperate with, respectively, at least one indentation(s) (37, 38, 39, 40) provided respectively on at least one of the shutters (4, 17, 18, 19) so as to allow the shutter(s) to be hooked on the corresponding pin in the position of preattachment of the casing.

10. Device according to Claim 9, **characterized in that** each of the shutters (4, 17, 18, 19) is associated with a pin (33, 34, 35, 36).
